# EUROPEAN PATENT SPECIFICATION

(11) **EP 4 536 517 B1**
(45) Date of publication and mention of the grant of the patent: **20.05.2026**
(21) Application number: 22731687.4
(22) Date of filing: 06.06.2022
(51) Int. Cl.: B60T 8/17, B60T 8/1755, B60W 30/18, B62D 53/08

(54) **A METHOD FOR CONTROLLING A VEHICLE COMBINATION**
VERFAHREN ZUR STEUERUNG EINER FAHRZEUGKOMBINATION
PROCÉDÉ DE COMMANDE D'UNE COMBINAISON DE VÉHICULES

(43) Date of publication of application: 16.04.2025
(73) Proprietor: VOLVO TRUCK CORPORATION, 405 08 Göteborg (SE)
(72) Inventor: ERDINC, Umur, 413 26 Göteborg (SE); JONASSON, Mats, 433 49 Partille (SE); JACOBSON, Bengt, 435 38 Mölnlycke (SE)
(74) Representative: Valea AB
(86) International application number: PCT/EP2022/065289
(87) International publication number: WO 2023/237175

(56) References cited:
- WO-A1-2022/106004
- WO-A1-98/36955
- DE-A1- 102012 112 418

## Description

### TECHNICAL FIELD

The invention relates to a method for controlling a vehicle combination. Moreover, the present invention relates to each one of a computer program, a computer readable medium, a control unit and a vehicle combination.

The invention can be applied in heavy-duty vehicles, such as trucks, buses and construction equipment. Although the invention will be described with respect to a truck, the invention is not restricted to this particular vehicle, but may also be used in other vehicles such as haulers, cars and the like.

### BACKGROUND

A vehicle combination generally comprises a tractor and a trailer. Traditionally, the tractor provides the propulsion force for the vehicle combination and the tractor as well as the trailer may be provided with brakes in order to ensure that the vehicle combination can be appropriately braked.

However, it is currently contemplated to use vehicle combinations in which each one of the tractor and the trailer comprises motion support devices for propelling as well as braking the vehicle combination. To this end, though purely by way of example, each one of the tractor and the trailer may be furnished with a set of electric motors. Such electric motors may be connected to electric storage systems, such as batteries.

Apart from being able to propel the vehicle combination with small or even zero CO₂ emissions, the electric motors may have the advantage that they can be used for regenerative braking wherein energy generated during braking by means of the electric motors can be transformed to electric energy to be stored in selected electric storage system(s).

Moreover, for other variants of vehicle combinations not necessarily comprising electric motors, there may be a need for controlling the force distribution amongst the motion support devices of the tractor and the trailer. As a non-limiting example, it may be desired to use only a limited number of service brakes at the time in order to ensure that other services brakes may be sufficiently cooled.

According to its abstract, WO98/36955 A1 relates to an electronic braking system suitable for commercial vehicles which tow trailers, which has on the towing vehicle, braking control of all the axles and a means of setting the braking demand for the trailer which is so adjusted as to equalise the utilisation of adhesion between said towing vehicle and trailer. The system includes two adaptive control loops which are adjusted sequentially in a coordinated manner in order to set respectively the towing vehicle and trailer braking to levels where overall train mean decelerations approximate closely to those corresponding levels demanded by the driver and at the same time set the distribution of braking to seek to achieve equal utilisation of adhesion between the tractor and trailer. The system also uses deceleration errors to sequentially adjust the two adaptive control loops.

According to its abstract, WO2022/106004 A1 relates to a method for controlling motion of a heavy-duty vehicle, comprising obtaining information related to an upcoming vehicle path and vehicle maneuver along the path, obtaining information related to a road friction coefficient along the upcoming vehicle path, configuring lateral and longitudinal wheel slip limits for at least two wheels of an axle or lumped group-axle on the heavy-duty vehicle, wherein lateral and longitudinal wheel slip values are related to respective lateral and longitudinal tyre force values via a pre-determined combined tyre slip model, determining a vehicle motion profile for performing the vehicle maneuver along the path as a solution to a non-linear optimal control problem, NOCP, wherein the NOCP is constrained by the lateral and longitudinal wheel slip limits and formulated to account for the road friction coefficient and/or curvature along the upcoming vehicle path, and controlling the motion of the heavy-duty vehicle along the path based on the determined target vehicle motion profile.

As may be realized from the above, it is desired to control the motion support devices of the tractor and the trailer, respectively, in an appropriate manner in order to arrive at desired force distributions.

### SUMMARY

An object of the invention is to provide a method that can control the force distribution amongst a tractor and a trailer in an appropriate manner.

The object is achieved by a method according to claim 1.

As such, the present invention relates to a method for controlling a vehicle combination. The vehicle combination comprises a tractor and a trailer. The tractor comprises a set of tractor wheels and the trailer comprises a set of trailer wheels. The tractor comprises a set of tractor motion support devices, comprising at least one tractor motion support device, connectable to the set of tractor wheels to thereby be adapted to provide at least a tractor force. The tractor force is at least one of a tractor propulsion force and a tractor brake force. The trailer comprises a set of trailer motion support devices, comprising at least one trailer motion support device, connectable to the set of trailer wheels to thereby be adapted to provide at least a trailer force. The trailer force is at least one of a trailer propulsion force and a trailer brake force.

The method comprises:
- receiving a request that a desired force imparted on the vehicle combination should be provided by the set of motion support devices of a unique dedicated unit of the vehicle combination, the unique dedicated unit being either the tractor or the trailer;
- upon determining that the desired force imparted on the vehicle combination can be provided by the set of motion support devices of the unique dedicated unit whilst fulfilling each safety requirement in a predetermined set of safety requirements of the vehicle combination, the predetermined set of safety requirements comprising at least one safety requirement, operating the set of motion support devices of the unique dedicated unit only so as to provide the desired force, otherwise operating one or more of the tractor motion support devices as well as one or more of the trailer motion support devices in order to provide the desired force imparted on the vehicle combination.

As used herein, the term "operating the set of motion support devices of the unique dedicated unit only so as to provide the desired force" is intended to encompass that the set of motion support devices of the unique dedicated unit alone are operated so as to provide the desired force. Put differently, the term "operating the set of motion support devices of the unique dedicated unit only so as to provide the desired force" is intended to encompass that the set of motion support devices of the tractor or trailer(s) not being the unique dedicated unit is not operated.

The above method implies an appropriate manner for determining when and how the set of motion support devices only of one unit of a vehicle combination can be used for providing a desired force.

According to the invention, the predetermined set of safety requirements of the vehicle combination comprises a lateral acceleration safety condition requiring that, for each one of the set of motion support devices of the unique dedicated unit, a longitudinal force produced by the motion support device must be equal to or lower than a longitudinal force limit value being determined by means of a longitudinal force limit function being a function of at least a lateral acceleration of the unique dedicated unit.

Purely by way of example, the longitudinal force limit values for each motion support device of the unique dedicated unit, i.e. the tractor or the trailer, can be summarized in order to obtain a longitudinal force limit value for the unique dedicated unit.

Optionally, the longitudinal force limit function is a function using a value proportional to the lateral acceleration of the unique dedicated unit as input and provides a value proportional to a normalized longitudinal force, being the longitudinal force divided by a total vertical load imparted on the wheel or wheels connected to the motion support device and the friction value indicative of the friction between the wheel or wheels connected to the motion support device and the ground supporting the unique dedicated unit, as output.

Optionally, the longitudinal force limit function uses the lateral acceleration of the unique dedicated unit divided by a friction reference value, as input, the friction reference value being a friction value, indicative of the friction between the set of wheels of the unique dedicated unit and the ground supporting the unique dedicated unit, multiplied by an acceleration value corresponding to acceleration due to gravity.

Optionally, the longitudinal force limit function is a step function such that: for values of the lateral acceleration of the unique dedicated unit divided by the friction reference value being equal to or smaller than a predetermined threshold as input, the output is set to a fixed non-zero value of the normalized longitudinal force, and for values of the lateral acceleration of the unique dedicated unit divided by a friction reference value being greater than the predetermined threshold as input, the output is set to zero.

Optionally, the predetermined set of safety requirements of the vehicle combination comprises a longitudinal slip safety condition requiring that a detected longitudinal slip value for at least a selected subset of the set of wheels for the unique dedicated unit is below a predetermined threshold.

Optionally, the predetermined set of safety requirements of the vehicle combination comprises a state determination condition requiring that for a predetermined vehicle state, a difference between a vehicle state measured value, relating to a measured value indicative of the predetermined vehicle state, and a vehicle state expected value, relating to an expected value indicative of the predetermined vehicle state, is within a predetermined state range.

Optionally, the vehicle state expected value is determined using a vehicle model of the vehicle combination, preferably the vehicle state expected value is determined using a vehicle model as well as a tire model of the set of tractor wheels and/or the set of trailer wheels.

Optionally, the predetermined vehicle state is a yaw rate of the unique dedicated unit.

Optionally, the predetermined vehicle state is an articulation angle or articulation angular rate between the tractor and the trailer.

Optionally, the predetermined vehicle state is a side slip angle of the unique dedicated unit.

Optionally, the predetermined vehicle state is a side slip angle of at least a selected subset of the set of wheels for the unique dedicated unit.

Optionally, the desired force imparted on the vehicle is a propulsion force.

Optionally, the desired force imparted on the vehicle is a brake force.

Optionally, the vehicle combination comprises one or more additional trailers or dollies, each additional trailer comprising a set of additional trailer motion support devices, comprising at least one additional trailer motion support device, connectable to the set of additional trailer wheels to thereby be adapted to provide at least an additional trailer force, the additional trailer force being at least one of an additional trailer propulsion force and an additional trailer brake force. The method comprises:
- receiving a request that a desired force imparted on the vehicle combination should be provided by the set of motion support devices of a unique dedicated unit of the vehicle combination, the unique dedicated unit being either the tractor, the trailer or one of the one or more additional trailers;
- upon determining that the desired force imparted on the vehicle combination can be provided by the set of motion support devices of the unique dedicated unit whilst fulfilling each safety requirement in a predetermined set of safety requirements of the vehicle combination, the predetermined set of safety requirements comprising at least one safety requirement, operating the set of motion support devices of the unique dedicated unit only so as to provide the desired force, otherwise operating one or more of the tractor motion support devices, as well as one or more of the trailer motion support devices and/or one or more of the additional trailer motion support devices of one or more of the one or more additional trailers, in order to provide the desired force imparted on the vehicle combination.

A second aspect of the present invention relates to a computer program comprising program code means for performing the steps of the method according to the first aspect of the present invention when the program is run on a computer.

A third aspect of the present invention relates to a computer readable medium carrying a computer program comprising program code means for performing the steps of the method according to the first aspect of the present invention when the program product is run on a computer.

A fourth aspect of the present invention relates to a control unit for controlling a vehicle, the control unit is configured to perform the steps of the method according to the first aspect of the present invention.

A fifth aspect of the present invention relates to a vehicle combination comprising a control unit according to the fourth aspect of the present invention.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
Fig. 1 is a schematic top view of a vehicle combination;
Fig. 2 is a flow chart illustrating an embodiment of the method of the invention;
Fig. 3 is diagram relating to an embodiment of the invention;
Fig. 4 is diagram relating to another embodiment of the invention, and
Fig. 5 is diagram illustrating a load envelope for a vehicle combination.

### DETAILED DESCRIPTION OF EXAMPLE EMBODIMENTS OF THE INVENTION

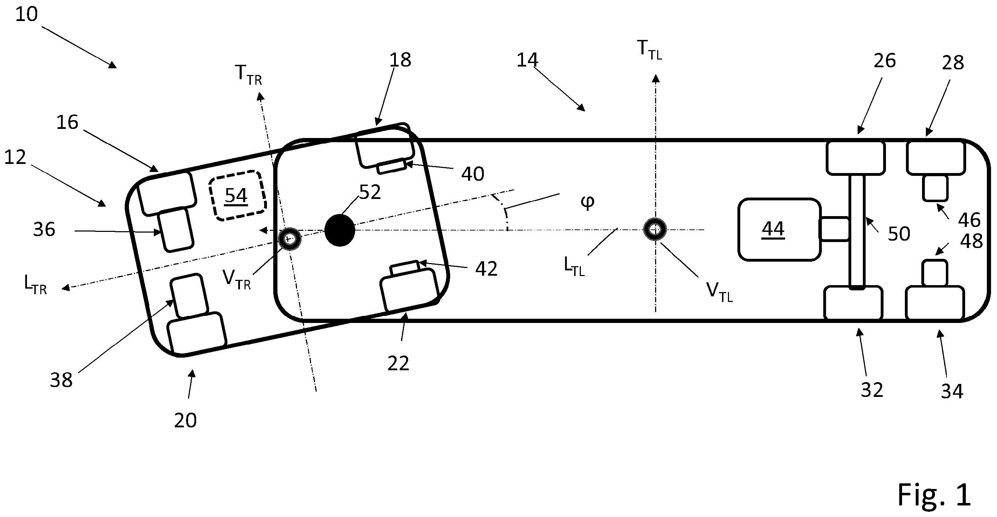

FIG. 1 shows an example vehicle combination 10 of the type considered in this disclosure.

As may be gleaned from Fig. 1, the vehicle combination 10 comprises a tractor 12 and a trailer 14. The tractor 12 comprises a set of tractor wheels 16, 18, 20, 22 and the trailer comprises a set of trailer wheels 26, 28, 32, 34. In the Fig. 1 embodiment of a vehicle combination 10, the set of tractor wheels 16, 18, 20, 22 comprises four wheels and the set of trailer wheels 26, 28, 32, 34 comprises six wheels. However, it is of course contemplated that each one of the set of tractor wheels and the set of trailer wheels may contain any number of wheels in various embodiments of the vehicle combination 10

Moreover, as indicated in Fig. 1, the tractor 12 comprises a set of tractor motion support devices 36, 38, 40, 42 comprising at least one tractor motion support device, connectable to the set of tractor wheels 16, 18, 20, 22 to thereby be adapted to provide at least a tractor force. The tractor force is at least one of a tractor propulsion force and a tractor brake force. In the Fig. 1 embodiment, the set of tractor motion support devices 36, 38, 40, 42 comprises two electric motors 36, 38, each one of which being connected to a dedicated wheel 16, 20. However, the set of tractor motion support devices 36, 38 may also or instead comprise an internal combustion engine (not shown). Moreover, in embodiments of the vehicle combination, a single motor, engine or other type of propulsion device may be connected to or more wheels via a shaft or axle for instance. Although the Fig. 1 implementation of the tractor 12 comprises two electric motors 36, 38, each one of which being connected to a dedicated front wheel 16, 20 it is also contemplated that other implementations of the tractor 12 may comprise one or more propulsion unit (not shown) connected to the real wheels 18, 22 of the tractor 12.

Additionally, in the Fig. 1 embodiment, the set of tractor motion support devices 36, 38, 40, 42 comprises services brakes 40, 42 each one of which being connected to a dedicated wheel 18, 22. Moreover, other implementations of the tractor 12 may comprise service brakes arranged at wheels also being connected to a propulsion unit, such as one of the electric motors 36, 38 mentioned hereinabove.

It should be noted that the implementation of the tractor 12 and the set of tractor motion support devices 36, 38, 40, 42 illustrated in Fig. 1 merely serve as an example and that other implementations of the tractor 12 may have other configurations of the set of tractor motion support devices 36, 38, 40, 42.

Moreover, as indicated in Fig. 1, the trailer comprises a set of trailer motion support devices 44, 46, 48, comprising at least one trailer motion support device, connectable to the set of trailer wheels 26, 28, 32, 34 to thereby be adapted to provide at least a trailer force. The trailer force is at least one of a trailer propulsion force and a trailer brake force. The implementation of the set of trailer motion support devices 44, 46, 48 illustrated in Fig. 1 comprises a propulsion device 44, which for instance may be implemented as an electric motor or an internal combustion engine, which is connected to two wheels via a shaft 50. The implementation of the set of trailer motion support devices 44, 46, 48 illustrated in Fig. 1 comprises services brakes 46, 48, each one of which being connected to a dedicated wheel 28, 24. In implementations of the trailer 14, each wheel axle, possibly each wheel, is connected to a service brake.

It should be noted that the implementation of the trailer 14 and the set of trailer motion support devices 44, 46, 48 illustrated in Fig. 1 merely serve as an example and that other implementations of the trailer 14 may have other configurations of the set of trailer motion support devices 44, 46, 48.

Moreover, as indicated in Fig. 1, the tractor 12 has a tractor longitudinal extension in a tractor longitudinal direction L_{TR}, a tractor lateral extension in a tractor lateral direction T_{TR} and a tractor vertical extension in a tractor vertical direction V_{TR}. The tractor longitudinal direction L_{TR} corresponds to an intended direction of travel of the tractor 12 when the vehicle combination 10 is travelling straight ahead. The tractor vertical direction V_{TR} corresponds to a direction of a normal to a planar surface supporting the tractor 12 and the tractor lateral direction T_{TR} is perpendicular to each one of the tractor longitudinal direction L_{TR} and the tractor vertical direction V_{TR}.

In a similar vein, the trailer 14 has a trailer longitudinal extension in a trailer longitudinal direction L_{TL}, a trailer lateral extension in a trailer lateral direction T_{TL} and a trailer vertical extension in a trailer vertical direction V_{TL}. The trailer longitudinal direction L_{TL} corresponds to an intended direction of travel of the trailer 14 when the vehicle combination 10 is travelling straight ahead. The trailer vertical direction V_{TL} corresponds to a direction of a normal to a planar surface supporting the trailer 14 and the trailer lateral direction T_{TL} is perpendicular to each one of the trailer longitudinal direction L_{TL} and the trailer vertical direction V_{TL}.

Moreover, the tractor 12 and the trailer 14 are generally, and as exemplified Fig. 1, pivotally connected to each other in a pivot point 52. Purely by way of example, such a pivot point 52 may be implemented by a so called fifth wheel. As such, when the vehicle combination 10 is operated there may be an articulation angle φ between the tractor longitudinal direction L_{TR} and the trailer longitudinal direction L_{TL}.

Moreover, Fig. 1 illustrates that the vehicle combination comprises a control unit 54 for controlling the vehicle combination 10. **In** the Fig. 1 embodiment, the control unit 54 is located in the tractor 12 but the control unit 54 may also be located in other positions, such as the trailer 14. The control unit 54 is adapted to communicate with the set of tractor motion support devices 36, 38, 40, 42 and the set of trailer motion support devices 44, 46, 48 in order to control the operation of the vehicle combination 10. To this end, the control unit 54 may be connected to the set of tractor motion support devices 36, 38, 40, 42 and the set of trailer motion support devices 44, 46, 48 via wires (not shown), via a CAN bus system (not shown), via ethernet, via a wireless system (not shown) or any combination of the above possibilities.

The present invention will be presented hereinbelow in relation to a method for controlling a vehicle combination 10. However, it should be noted that the below information is equally applicable to the above-mentioned control unit 54.

As such, the present invention relates to a method for controlling a vehicle combination 10. As intimated above, the vehicle combination 10 comprises a tractor 12 and a trailer 14. The tractor 12 comprises a set of tractor wheels 16, 18, 20, 22 and the trailer comprises a set of trailer wheels 26, 28, 32, 34. The tractor comprises a set of tractor motion support devices 36, 38, 40, 42, comprising at least one tractor motion support device, connectable to the set of tractor wheels 16, 18, 20, 22 to thereby be adapted to provide at least a tractor force. The tractor force is at least one of a tractor propulsion force and a tractor brake force. The trailer comprises a set of trailer motion support devices 44, 46, 48, comprising at least one trailer motion support device, connectable to the set of trailer wheels 26, 28, 32, 34 to thereby be adapted to provide at least a trailer force. The trailer force is at least one of a trailer propulsion force and a trailer brake force.

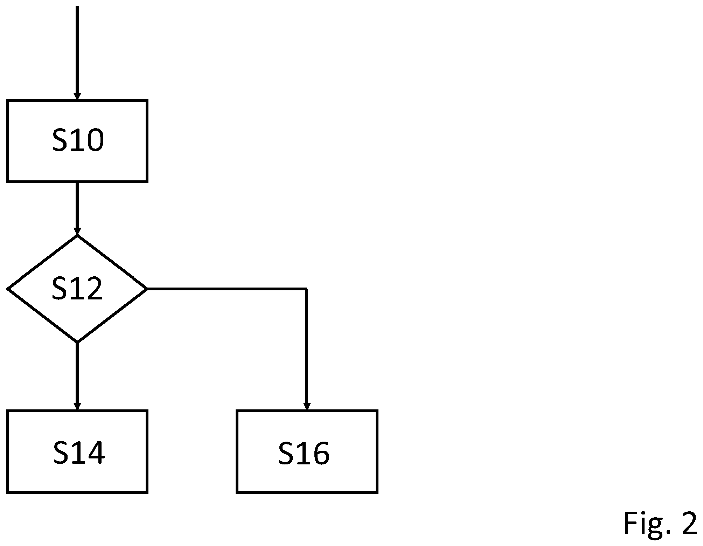

With reference to Fig. 2, the method comprises:
Receiving a request that a desired force imparted on the vehicle combination 10 should be provided by the set of motion support devices of a unique dedicated unit of the vehicle combination, the unique dedicated unit being either the tractor or the trailer (S10). As a non-limiting example, such a request may be issued from an operator, for instance using an actuating device such as a lever, knob or touch-screen (not shown), or from an autonomous drive system (not shown).

Purely by way of example, such a request may be implemented as one of the following:
- Imparting a desired braking force on the vehicle combination 10 by the set of motion support devices of the tractor 12 only. Such an implementation may for instance be desired when employing regenerative braking of the tractor 12 in order to charge one or more electric energy storage devices (not shown) of the tractor.
- Imparting a desired propulsion force on the vehicle combination 10 by the set of motion support devices of the trailer 14 only. Such an implementation may for instance be desired when energy storage means associated with the set of tractor motion support devices 36, 38, 40, 42 has a low amount of energy.
- Imparting a desired braking force on the vehicle combination 10 by the set of motion support devices of the trailer only. Such an implementation may for instance be desired when employing regenerative braking of the trailer 14 in order to charge one or more electric energy storage devices (not shown) of the trailer.
- Imparting a desired propulsion force on the vehicle combination 10 by the set of motion support devices of the tractor 14 only. Such an implementation may for instance be desired when energy storage means associated with the set of trailer motion support devices 46, 48, 50 has a low amount of energy.

Irrespective of the selected unique dedicated unit and the reasons for selecting that unique dedicated unit, the method further comprises:
Upon determining that the desired force imparted on the vehicle combination can be provided by the set of motion support devices of the unique dedicated unit whilst fulfilling each safety requirement in a predetermined set of safety requirements of the vehicle combination, the predetermined set of safety requirements comprising at least one safety requirement (S12), operating the set of motion support devices of the unique dedicated unit only so as to provide the desired force (S14), otherwise operating one or more of the tractor motion support devices as well as one or more of the trailer motion support devices in order to provide the desired force imparted on the vehicle combination (S16).

Generally, it should be noted that upon determining that the desired force imparted on the vehicle combination cannot be provided by the set of motion support devices of the unique dedicated unit whilst fulfilling each safety requirement in a predetermined set of safety requirements of the vehicle combination, the method preferably comprises operating the set of motion support devices of the unique dedicated unit so as to provide a reduced force having a smaller absolute value than the absolute value of the desired force. Preferably, such a reduced force is determined by determining the force with the largest absolute value that can be provided by the set of motion support devices of the unique dedicated unit whilst fulfilling each safety requirement in a predetermined set of safety requirements of the vehicle combination. The remaining load, viz the difference between the desired force and the reduced force can thereafter be provided by the set of motion support devices of the tractor 12 or trailer 14 not being the unique dedicated unit.

However, it is also contemplated that in embodiments of the method of the invention, determining that the desired force imparted on the vehicle combination cannot be provided by the set of motion support devices of the unique dedicated unit whilst fulfilling each safety requirement in a predetermined set of safety requirements of the vehicle combination, the method may comprise determining a predetermined force distribution of the forces provided by the set of motion support devices of the tractor 12 and the trailer 14 in order to arrive at the desired force.

Hereinbelow, various implementations of the safety requirement will be presented.

In a first implementation, the predetermined set of safety requirements of the vehicle combination comprises a lateral acceleration safety condition requiring that, for each one of the set of motion support devices of the unique dedicated unit, a longitudinal force Fₓ produced by the motion support device must be equal to or lower than a longitudinal force limit value being determined by means of a longitudinal force limit function being a function of at least a lateral acceleration ay of the unique dedicated unit.

The lateral acceleration a_{y} extends in the later direction of the unique dedicated unit, viz the tractor lateral direction T_{TR} for the tractor 12 and the trailer lateral direction T_{TL} for the trailer 14. The lateral acceleration a_{y} may be measured using an acceleration sensor (not shown) located in the unique dedicated unit, viz the tractor 12 or the trailer 14.

The longitudinal force Fₓ may be a propulsion force or a braking force.

Purely by way of example, the longitudinal force limit function may be a function using a value proportional to the lateral acceleration a_{y} of the unique dedicated unit as input and provides a value proportional to a normalized longitudinal force Fₓ/µF_{z}, being the longitudinal force Fₓ divided by a total vertical load F_{z} imparted on the wheel or wheels connected to the motion support device and the friction value µ indicative of the friction between the wheel or wheels connected to the motion support device and the ground supporting the unique dedicated unit, as output.

Moreover, though again by way of example, the longitudinal force limit function uses the lateral acceleration a_{y} of the unique dedicated unit divided by a friction reference value µg as input, the friction reference value being a friction value µ, indicative of the friction between the set of wheels of the unique dedicated unit and the ground supporting the unique dedicated unit, multiplied by an acceleration value g corresponding to acceleration due to gravity.

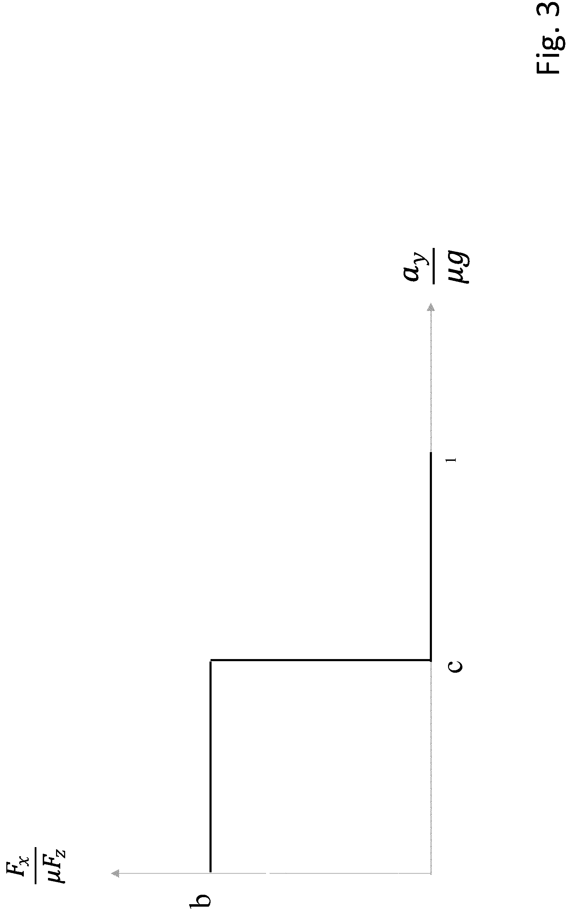

With reference to Fig 3, the longitudinal force limit function may be a step function such that:
- for values of the lateral acceleration a_{y} of the unique dedicated unit divided by the friction reference value µg being equal to or smaller than a predetermined threshold as input (the threshold is indicated by reference c in Fig. 3), the output is set to a fixed non-zero value of the normalized longitudinal force, and
- for values of the lateral acceleration of the unique dedicated unit divided by a friction reference value being greater than the predetermined threshold as input, the output is set to zero.

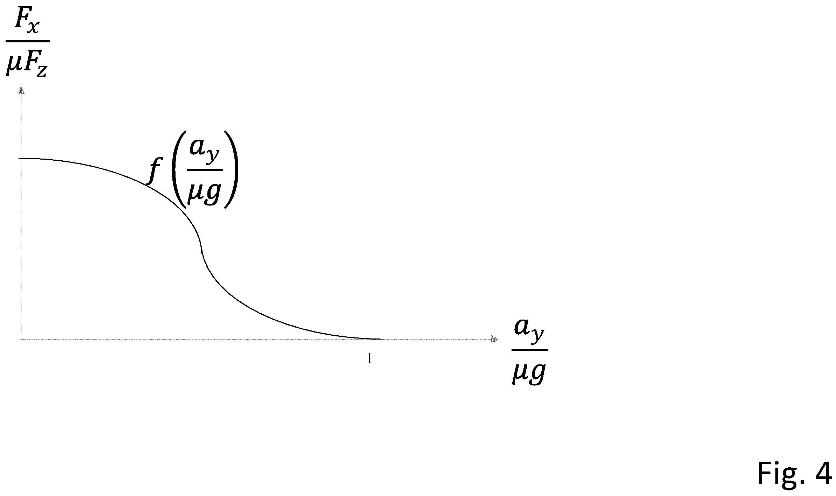

It should be noted that the longitudinal force limit function need not be a step function. To this end, reference is made to Fig. 4 illustrating an implementation in which the longitudinal force limit function is a continuous function.

Irrespective of how the longitudinal force limit function is implemented, the longitudinal force limit value can be determined for each motion support device of the unique dedicated unit, for instance following the below procedure.

A lateral acceleration a_{y} of the unique dedicated unit, viz the tractor 12 or the trailer 14, may be determined. Such a lateral acceleration value a_{y} may for instance be determined using an accelerometer (not shown). Moreover, a value indicative of the friction value µ indicative of the friction between the wheel or wheels connected to the motion support device and the ground supporting the unique dedicated unit may be determined. Such a friction value µ may be determined using any known procedure, such as using a sensor (such as a camera) for monitoring the condition of the ground onto which the unique dedicated unit is travelling and/or by using a brush model or using a slip value associated with the wheel or wheels. Furthermore, the total vertical load currently imparted on the wheel or wheels connected to is motion support device is determined, for instance using information obtainable from the suspension device or devices connected to the wheel or wheels.

The lateral acceleration value a_{y} and the friction value µ can be used as input to a longitudinal force limit function, for instance as exemplified hereinabove with reference to Fig. 3 or Fig. 4, in order to arrive at value of a normalized longitudinal force Fₓ/µF_{z}. The longitudinal force limit value Fₓ may then be determined by multiplying the normalized longitudinal force Fₓ/µF_{z} by the friction value µ and the total vertical load F_{z} currently imparted on the wheel or wheels connected to is motion support device.

The above procedure can be carried out for each motion support device of the unique dedicated unit, i.e. the tractor 12 or the trailer 14, and the longitudinal force limit values Fₓ can thereafter be summarized in order to arrive at a total longitudinal force limit value associated with the unique dedicated unit.

Instead of, or in addition to the above-mentioned lateral acceleration safety condition, the predetermined set of safety requirements of the vehicle combination may comprise a longitudinal slip safety condition requiring that a detected longitudinal slip value for at least a selected subset of the set of wheels for the unique dedicated unit is below a predetermined threshold. As such, the unique dedicated unit, i.e. the tractor 12 or the trailer 14, may be equipped with means for determining a longitudinal slip value for at least a selected subset of the set of wheels associated with the unique dedicated unit. Thereafter, each determined longitudinal slip value may be compared to a predetermined threshold in order to ensure that no excessive slipping occurs for any one of the selected subset of the set of wheels. In response to verifying that no excessive slipping occurs, the longitudinal slip safety condition may be deemed to have been met or fulfilled.

Instead of, or in addition to the above-mentioned safety conditions, the predetermined set of safety requirements of the vehicle combination may comprise a state determination condition requiring that for a predetermined vehicle state, a difference between a vehicle state measured value, relating to a measured value indicative of the predetermined vehicle state, and an vehicle state expected value, relating to an expected value indicative of the predetermined vehicle state, is within a predetermined state range.

Purely by way of example, the vehicle state expected value may be determined using a vehicle model of the vehicle combination, preferably the vehicle state expected value is determined using a vehicle model as well as a tire model of the set of tractor wheels and/or the set of trailer wheels.

For instance, predetermined vehicle state is a yaw rate of the unique dedicated unit. A yaw rate is generally associated with a speed of rotation around and axis extending in the vertical direction of the unique dedicated unit.

As another non-limiting example, the predetermined vehicle state may be an articulation angle φ, the the above presentation of the articulation angle φ with reference to Fig. 1, or articulation angular rate *φ̇* between the tractor 12 and the trailer 14.

Moreover, the predetermined vehicle state may be a side slip angle of the unique dedicated unit.

Furthermore, the predetermined vehicle state may be a side slip angle of at least a selected subset of the set of wheels for the unique dedicated unit.

It should be noted that the embodiments of the method according to the present invention may use a combination of state determination conditions as exemplified above.

As has been intimated above, the desired force imparted on the vehicle may be a propulsion force or a brake force.

It should also be noted that the present invention is not limited to a vehicle combination 10 comprising a tractor and a single trailer. As such, in embodiment of the method, the vehicle combination comprises one or more additional trailers, each additional trailer comprising a set of additional trailer motion support devices, comprising at least one additional trailer motion support device, connectable to the set of additional trailer wheels to thereby be adapted to provide at least an additional trailer force, the additional trailer force being at least one of an additional trailer propulsion force and an additional trailer brake force.

The method comprises:
- receiving a request that a desired force imparted on the vehicle combination should be provided by the set of motion support devices of a unique dedicated unit of the vehicle combination, the unique dedicated unit being either the tractor, the trailer or one of the one or more additional trailers;
- upon determining that the desired force imparted on the vehicle combination can be provided by the set of motion support devices of the unique dedicated unit whilst fulfilling each safety requirement in a predetermined set of safety requirements of the vehicle combination, the predetermined set of safety requirements comprising at least one safety requirement, operating the set of motion support devices of the unique dedicated unit only so as to provide the desired force, otherwise operating one or more of the tractor motion support devices, as well as one or more of the trailer motion support devices and/or one or more of the additional trailer motion support devices of one or more of the one or more additional trailers, in order to provide the desired force imparted on the vehicle combination.

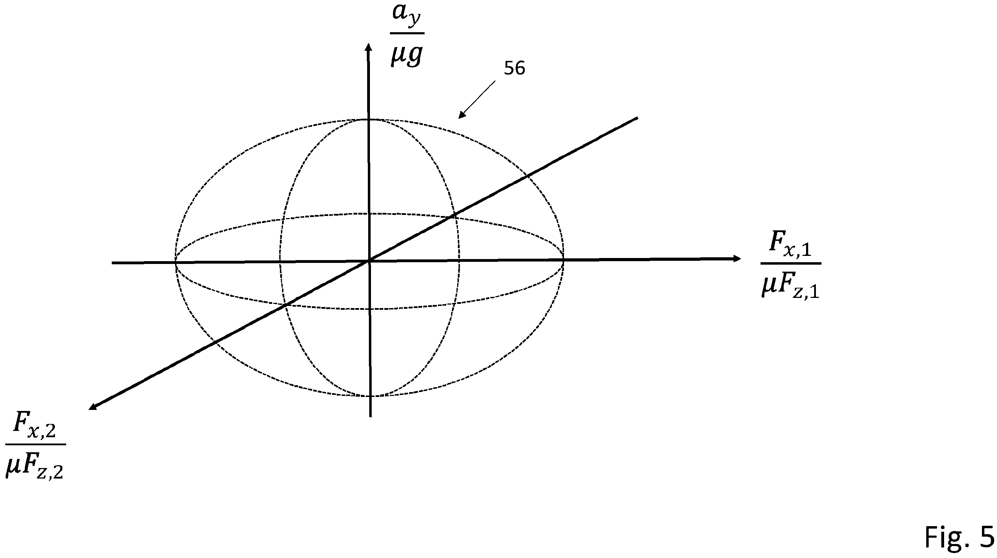

Finally, Fig. 5 illustrates a force envelope 56 for a vehicle combination 10 comprising a first and second motion support device. For each one of the motion support devices, the Fig. 5 force envelope presents a limit for normalized longitudinal force F_{x,1}/µF_{z,1} or F_{x,2}/µF_{z,2} as discussed hereinabove as a function of the lateral acceleration a_{y} of the unit concerned, viz the tractor 12 or the trailer 14, divided by the above-mentioned friction reference value µg.

As may be gleaned from Fig. 5, the envelope can be used for determining a maximum combined longitudinal load that can be provided by the first and second motion support devices whilst fulfilling each safety requirement in a predetermined set of safety requirements of the vehicle combination. Thus, the Fig. 5 envelope can be used for identifying one or more suitable pairs for the longitudinal forces provided by the first and second motion support devices.

Needless to say, the Fig. 5 envelope can be extended so as to include a plurality of motion support devices exceeding two such that an envelope is generated for each motion support device in a vehicle combination 10.

Moreover, the longitudinal force limit value for each motion support device of the tractor 12 may be summarized in order to arrive at a longitudinal force limit value for the longitudinal force that currently can be produced by all the motion support devices of the tractor 12. In a similar vein, the longitudinal force limit value for each motion support device of the trailer 14 may be summarized in order to arrive at a longitudinal force limit value for the longitudinal force that currently can be produced by all the motion support devices of the trailer 14.

The longitudinal force limit value for all the motion support devices of the tractor and the trailer, respectively, can thereafter be used in order to determine suitable combinations of the longitudinal forces provided by the tractor 12 and the trailer 14.

It is to be understood that the present invention is not limited to the embodiments described above and illustrated in the drawings; rather, the skilled person will recognize that many changes and modifications may be made within the scope of the appended claims.

## Claims

1. A method for controlling a vehicle combination (10), the vehicle combination (10) comprising a tractor (12) and a trailer (14), said tractor (12) comprising a set of tractor wheels (16, 18, 20, 22) and said trailer (14) comprising a set of trailer wheels (26, 28, 32, 34), the tractor (12) comprising a set of tractor motion support devices (36, 38, 40, 42), comprising at least one tractor motion support device, connectable to said set of tractor wheels (16, 18, 20, 22) to thereby be adapted to provide at least a tractor force, said tractor force being at least one of a tractor propulsion force and a tractor brake force, and the trailer (14) comprising a set of trailer motion support devices (44, 46, 48), comprising at least one trailer motion support device, connectable to said set of trailer wheels (26, 28, 32, 34) to thereby be adapted to provide at least a trailer force, said trailer force being at least one of a trailer propulsion force and a trailer brake force, the method comprising:
- receiving a request that a desired force imparted on the vehicle combination (10) should be provided by the set of motion support devices of a unique dedicated unit of the vehicle combination (10), said unique dedicated unit being either said tractor (12) or said trailer (14);
- upon determining that said desired force imparted on the vehicle combination (10) can be provided by said set of motion support devices of said unique dedicated unit whilst fulfilling each safety requirement in a predetermined set of safety requirements of the vehicle combination (10), said predetermined set of safety requirements comprising at least one safety requirement, operating said set of motion support devices of said unique dedicated unit only so as to provide the desired force, otherwise operating one or more of the tractor (12) motion support devices as well as one or more of the trailer (14) motion support devices in order to provide the desired force imparted on the vehicle combination (10),
**characterized in that** said predetermined set of safety requirements of the vehicle combination (10) comprises a lateral acceleration safety condition requiring that, for each one of said set of motion support devices of said unique dedicated unit, a longitudinal force (Fₓ) produced by said motion support device must be equal to or lower than a longitudinal force limit value being determined by means of a longitudinal force limit function being a function of at least a lateral acceleration (a_{y}) of said unique dedicated unit.

2. The method according to claim 1, wherein said longitudinal force limit function is a function using a value proportional to said lateral acceleration (a_{y}) of said unique dedicated unit as input and provides a value proportional to a normalized longitudinal force (Fₓ/µF_{z}), being the longitudinal force (Fₓ) divided by a total vertical load (F_{z}) imparted on the wheel or wheels connected to said motion support device and the friction value (µ) indicative of the friction between the wheel or wheels connected to said motion support device and the ground supporting the unique dedicated unit, as output.

3. The method according to claim 2, wherein said longitudinal force limit function uses said lateral acceleration (a_{y}) of said unique dedicated unit divided by a friction reference value (µg), as input, said friction reference value being a friction value (µ), indicative of the friction between the set of wheels of said unique dedicated unit and the ground supporting said unique dedicated unit, multiplied by an acceleration value (g) corresponding to acceleration due to gravity, wherein preferably said longitudinal force limit function is a step function such that:
- for values of said lateral acceleration (a_{y}) of said unique dedicated unit divided by said friction reference value (µg) being equal to or smaller than a predetermined threshold as input, said output is set to a fixed non-zero value of said normalized longitudinal force (Fₓ/µF_{z}), and
- for values of said lateral acceleration (a_{y}) of said unique dedicated unit divided by a friction reference value (µg) being greater than said predetermined threshold as input, said output is set to zero.

4. The method according to any one of the preceding claims, wherein said predetermined set of safety requirements of the vehicle combination (10) comprises a longitudinal slip safety condition requiring that a detected longitudinal slip value for at least a selected subset of said set of wheels for said unique dedicated unit is below a predetermined threshold.

5. The method according to any one of the preceding claims, wherein said predetermined set of safety requirements of the vehicle combination (10) comprises a state determination condition requiring that for a predetermined vehicle state, a difference between a vehicle state measured value, relating to a measured value indicative of the predetermined vehicle state, and an vehicle state expected value, relating to an expected value indicative of the predetermined vehicle state, is within a predetermined state range, wherein preferably said vehicle state expected value is determined using a vehicle model of said vehicle combination (10), preferably said vehicle state expected value is determined using a vehicle model as well as a tire model of the set of tractor wheels (16, 18, 20, 22) and/or the set of trailer wheels (24, 26, 28, 30, 32, 34).

6. The method according to claim 5, wherein said predetermined vehicle state is a yaw rate of the unique dedicated unit.

7. The method according to any one of claims 5 to 6, wherein said predetermined vehicle state is an articulation angle (φ) or articulation angular rate (*φ̇*) between said tractor (12) and said trailer (14).

8. The method according to any one of claims 5 to 7, wherein said predetermined vehicle state is a side slip angle of the unique dedicated unit.

9. The method according to any one of claims 5 to 8, wherein said predetermined vehicle state is a side slip angle of at least a selected subset of said set of wheels for said unique dedicated unit.

10. The method according to any one of the preceding claims, wherein the desired force imparted on the vehicle is a propulsion force or wherein the desired force imparted on the vehicle is a brake force.

11. The method according to any one of the preceding claims, wherein the vehicle combination (10) comprises one or more additional trailer (14)s, each additional trailer (14) comprising a set of additional trailer (14) motion support devices, comprising at least one additional trailer (14) motion support device, connectable to said set of additional trailer (14) wheels to thereby be adapted to provide at least an additional trailer (14) force, said additional trailer (14) force being at least one of an additional trailer (14) propulsion force and an additional trailer (14) brake force, the method comprising:
- receiving a request that a desired force imparted on the vehicle combination (10) should be provided by the set of motion support devices of a unique dedicated unit of the vehicle combination (10), said unique dedicated unit being either said tractor (12), said trailer (14) or one of said one or more additional trailer (14)s;
- upon determining that said desired force imparted on the vehicle combination (10) can be provided by said set of motion support devices of said unique dedicated unit whilst fulfilling each safety requirement in a predetermined set of safety requirements of the vehicle combination (10), said predetermined set of safety requirements comprising at least one safety requirement, operating said set of motion support devices of said unique dedicated unit only so as to provide the desired force, otherwise operating one or more of the tractor (12) motion support devices, as well as one or more of the trailer (14) motion support devices and/or one or more of the additional trailer (14) motion support devices of one or more of the one or more additional trailer (14)s, in order to provide the desired force imparted on the vehicle combination (10).

12. A computer program comprising program code means for performing the steps of any of the preceding claims when said program is run on a computer.

13. A computer readable medium carrying a computer program comprising program code means for performing the steps of any of claims 1 - 11 when said program product is run on a computer.

14. A control unit for controlling a vehicle, the control unit being configured to perform the steps of the method according to any of claims 1 - 11.

15. A vehicle combination (10) comprising a control unit according to claim 14.

## Patentansprüche

1. Verfahren zum Steuern einer Fahrzeugkombination (10), wobei die Fahrzeugkombination (10) eine Zugmaschine (12) und einen Anhänger (14) umfasst, wobei die Zugmaschine (12) einen Satz von Zugmaschinenrädern (16, 18, 20, 22) umfasst und der Anhänger (14) einen Satz von Anhängerrädern (26, 28, 32, 34) umfasst, wobei die Zugmaschine (12) einen Satz von Zugmaschinen-Bewegungstragevorrichtungen (36, 38, 40, 42) umfasst, der mindestens eine Zugmaschinen-Bewegungstragevorrichtung umfasst, die mit dem Satz von Zugmaschinenrädern (16, 18, 20, 22) verbindbar ist, um dadurch dafür ausgelegt zu sein, mindestens eine Zugmaschinenkraft bereitzustellen, wobei die Zugmaschinenkraft mindestens eines von einer Zugmaschinenantriebskraft und einer Zugmaschinenbremskraft ist, und wobei der Anhänger (14) einen Satz von Anhänger-Bewegungstragevorrichtungen (44, 46, 48) umfasst, der mindestens eine Anhänger-Bewegungstragevorrichtung umfasst, die mit dem Satz von Anhängerrädern (26, 28, 32, 34) verbindbar ist, um dadurch dafür ausgelegt zu sein, mindestens eine Anhängerkraft bereitzustellen, wobei die Anhängerkraft mindestens eines von einer Anhängerantriebskraft und einer Anhängerbremskraft ist, das Verfahren umfassend:
- Empfangen einer Anfrage, dass eine gewünschte auf die Fahrzeugkombination (10) ausgeübte Kraft durch den Satz von Bewegungstragevorrichtungen einer eindeutigen bestimmten Einheit der Fahrzeugkombination (10) bereitgestellt werden soll, wobei die eindeutige bestimmte Einheit entweder die Zugmaschine (12) oder der Anhänger (14) ist;
- bei Bestimmen, dass die gewünschte auf die Fahrzeugkombination (10) ausgeübte Kraft durch den Satz von Bewegungstragevorrichtungen der eindeutigen bestimmten Einheit bereitgestellt werden kann, während jede Sicherheitsanforderung in einem vorbestimmten Satz von Sicherheitsanforderungen der Fahrzeugkombination (10) erfüllt wird, wobei der vorbestimmte Satz von Sicherheitsanforderungen mindestens eine Sicherheitsanforderung umfasst, Betreiben des Satzes von Bewegungstragevorrichtungen der eindeutigen bestimmten Einheit nur so, dass die gewünschte Kraft bereitgestellt wird, andernfalls Betreiben einer oder mehrerer der Zugmaschinen (12)-Bewegungstragevorrichtungen sowie einer oder mehrerer der Anhänger (14)-Bewegungstragevorrichtungen, um die gewünschte auf die Fahrzeugkombination (10) ausgeübte Kraft bereitzustellen,
**dadurch gekennzeichnet, dass** der vorbestimmte Satz von Sicherheitsanforderungen der Fahrzeugkombination (10) eine Querbeschleunigungssicherheitsbedingung umfasst, die erfordert, dass für jede aus dem Satz von Bewegungstragevorrichtungen der eindeutigen bestimmten Einheit eine von der Bewegungstragevorrichtung hervorgebrachte Längskraft (Fₓ) gleich oder kleiner als ein Längskraftgrenzwert sein muss, der mittels einer Längskraftgrenzfunktion bestimmt wird, die eine Funktion von mindestens einer Querbeschleunigung (a_{y}) der eindeutigen bestimmten Einheit ist.

2. Verfahren nach Anspruch 1, wobei die Längskraftgrenzfunktion eine Funktion ist, die einen Wert als Eingabe verwendet, der proportional zu der Querbeschleunigung (a_{y}) der eindeutigen bestimmten Einheit ist, und einen Wert als Ausgabe bereitstellt, der proportional zu einer normalisierten Längskraft (Fₓ/µF_{z}) ist, die Folgendes ist: die Längskraft (Fₓ) geteilt durch eine Gesamtvertikallast (F_{z}), die auf das Rad oder die Räder, die mit der Bewegungstragevorrichtung verbunden sind, aufgebracht wird, und den Reibungswert (µ), der angebend ist für die Reibung zwischen dem Rad oder den Rädern, die mit der Bewegungstragevorrichtung verbunden sind, und dem Boden, der die eindeutige bestimmte Einheit trägt.

3. Verfahren nach Anspruch 2, wobei die Längskraftgrenzfunktion die Querbeschleunigung (a_{y}) der eindeutigen bestimmten Einheit geteilt durch einen Reibungsreferenzwert (µg) als Eingabe verwendet, wobei der Reibungsreferenzwert ein Reibungswert (µ) ist, der angebend ist für die Reibung zwischen dem Radsatz der eindeutigen bestimmten Einheit und dem die eindeutige bestimmte Einheit tragenden Boden, multipliziert mit einem Beschleunigungswert (g), der der Erdbeschleunigung entspricht, wobei bevorzugt die Längskraftgrenzfunktion eine Schrittfunktion ist, so dass:
- für Werte der Querbeschleunigung (a_{y}) der eindeutigen bestimmten Einheit geteilt durch den Reibungsreferenzwert (µg), die gleich oder kleiner als ein vorbestimmter Schwellenwert sind, als Eingabe, die Ausgabe auf einen festen Nicht-Null-Wert der normalisierten Längskraft (Fₓ/µF_{z}) gesetzt wird, und
- für Werte der Querbeschleunigung (a_{y}) der eindeutigen bestimmten Einheit geteilt durch einen Reibungsreferenzwert (µg), die größer als der vorbestimmte Schwellenwert sind, als Eingabe, die Ausgabe auf null gesetzt wird.

4. Verfahren nach einem der vorstehenden Ansprüche, wobei der vorbestimmte Satz von Sicherheitsanforderungen der Fahrzeugkombination (10) eine Längsschlupfsicherheitsbedingung umfasst, die erfordert, dass ein detektierter Längsschlupfwert für mindestens eine ausgewählte Teilmenge des Satzes von Rädern für die eindeutige bestimmte Einheit unter einem vorbestimmten Schwellenwert liegt.

5. Verfahren nach einem der vorstehenden Ansprüche, wobei der vorbestimmte Satz von Sicherheitsanforderungen der Fahrzeugkombination (10) eine Zustandsbestimmungsbedingung umfasst, die erfordert, dass für einen vorbestimmten Fahrzeugzustand eine Differenz zwischen einem gemessenen Fahrzeugzustandswert, der sich auf einen gemessenen Wert bezieht, der angebend ist für den vorbestimmten Fahrzeugzustand, und einem erwarteten Fahrzeugzustandswert, der sich auf einen erwarteten Wert bezieht, der angebend ist für den vorbestimmten Fahrzeugzustand, innerhalb eines vorbestimmten Zustandsbereichs liegt, wobei bevorzugt der erwartete Fahrzeugzustandswert unter Verwendung eines Fahrzeugmodells der Fahrzeugkombination (10) bestimmt wird, bevorzugt der erwartete Fahrzeugzustandswert unter Verwendung eines Fahrzeugmodells sowie eines Reifenmodells des Satzes von Zugmaschinenrädern (16, 18, 20, 22) und/oder des Satzes von Anhängerrädern (24, 26, 28, 30, 32, 34) bestimmt wird.

6. Verfahren nach Anspruch 5, wobei der vorbestimmte Fahrzeugzustand eine Gierrate der eindeutigen bestimmten Einheit ist.

7. Verfahren nach einem der Ansprüche 5 bis 6, wobei der vorbestimmte Fahrzeugzustand ein Knickwinkel (φ) oder eine Knickwinkelrate (*φ̇*) zwischen der Zugmaschine (12) und dem Anhänger (14) ist.

8. Verfahren nach einem der Ansprüche 5 bis 7, wobei der vorbestimmte Fahrzeugzustand ein Seitenschlupfwinkel der eindeutigen bestimmten Einheit ist.

9. Verfahren nach einem der Ansprüche 5 bis 8, wobei der vorbestimmte Fahrzeugzustand ein Seitenschlupfwinkel von mindestens einem ausgewählten Teilsatz des Satzes von Rädern für die eindeutige bestimmte Einheit ist.

10. Verfahren nach einem der vorstehenden Ansprüche, wobei die gewünschte auf das Fahrzeug ausgeübte Kraft eine Antriebskraft ist oder wobei die gewünschte auf das Fahrzeug ausgeübte Kraft eine Bremskraft ist.

11. Verfahren nach einem der vorstehenden Ansprüche, wobei die Fahrzeugkombination (10) einen oder mehrere Zusatzanhänger (14) umfasst, wobei jeder Zusatzanhänger (14) einen Satz von Zusatzanhänger (14)-Bewegungstragevorrichtungen umfasst, der mindestens eine Zusatzanhänger (14)-Bewegungstragevorrichtung umfasst, die mit dem Satz von Zusatzanhänger (14)-Rädern verbindbar ist, um dadurch dafür ausgelegt zu sein, mindestens eine Zusatzanhänger (14)-Kraft bereitzustellen, wobei die Zusatzanhänger (14)-Kraft mindestens eines von einer Zusatzanhänger (14)-Antriebskraft und einer Zusatzanhänger (14)-Bremskraft ist, das Verfahren umfassend:
- Empfangen einer Anfrage, dass eine gewünschte auf die Fahrzeugkombination (10) ausgeübte Kraft durch den Satz von Bewegungstragevorrichtungen einer eindeutigen bestimmten Einheit der Fahrzeugkombination (10) bereitgestellt werden soll, wobei die eindeutige bestimmte Einheit entweder die Zugmaschine (12), der Anhänger (14) oder eines des einen oder der mehreren Zusatzanhänger (14) ist;
- bei Bestimmen, dass die gewünschte auf die Fahrzeugkombination (10) ausgeübte Kraft durch den Satz von Bewegungstragevorrichtungen der eindeutigen bestimmten Einheit bereitgestellt werden kann, während jede Sicherheitsanforderung in einem vorbestimmten Satz von Sicherheitsanforderungen der Fahrzeugkombination (10) erfüllt wird, wobei der vorbestimmte Satz von Sicherheitsanforderungen mindestens eine Sicherheitsanforderung umfasst, Betreiben des Satzes von Bewegungstragevorrichtungen der eindeutigen bestimmten Einheit nur so, dass die gewünschte Kraft bereitgestellt wird, andernfalls Betreiben einer oder mehrerer der Zugmaschine (12)-Bewegungstragevorrichtungen, sowie einer oder mehrerer der Anhänger (14)-Bewegungstragevorrichtungen und/oder einer oder mehrerer Zusatzanhänger (14)-Bewegungstragevorrichtungen des einen oder der mehreren Zusatzanhänger (14), um die gewünschte auf die Fahrzeugkombination (10) ausgeübte Kraft bereitzustellen.

12. Computerprogramm, umfassend Programmcodemittel zum Durchführen der Schritte nach einem der vorstehenden Ansprüche, wenn das Programm auf einem Computer ausgeführt wird.

13. Computerlesbares Medium, das ein Computerprogramm speichert, das Programmcodemittel zum Durchführen der Schritte nach einem der Ansprüche 1 bis 11 umfasst, wenn das Programmprodukt auf einem Computer ausgeführt wird.

14. Steuereinheit zum Steuern eines Fahrzeugs, wobei die Steuereinheit konfiguriert ist, um die Schritte des Verfahrens nach einem der Ansprüche 1 bis 11 durchzuführen.

15. Fahrzeugkombination (10), das eine Steuereinheit nach Anspruch 14 umfasst.

## Revendications

1. Procédé pour la commande d'une combinaison de véhicules (10), la combinaison de véhicules (10) comprenant un tracteur (12) et une remorque (14), ledit tracteur (12) comprenant un ensemble de roues de tracteur (16, 18, 20, 22) et ladite remorque (14) comprenant un ensemble de roues de remorque (26, 28, 32, 34), le tracteur (12) comprenant un ensemble de dispositifs d'aide au mouvement de tracteur (36, 38, 40, 42), comprenant au moins un dispositif d'aide au mouvement de tracteur, pouvant être relié audit ensemble de roues de tracteur (16, 18, 20, 22) pour être ainsi adapté pour fournir au moins une force de tracteur, ladite force de tracteur étant au moins l'une parmi une force de propulsion de tracteur et une force de freinage de tracteur, et la remorque (14) comprenant un ensemble de dispositifs d'aide au mouvement de remorque (44, 46, 48), comprenant au moins un dispositif d'aide au mouvement de remorque, pouvant être relié audit ensemble de roues de remorque (26, 28, 32, 34) pour être ainsi adapté pour fournir au moins une force de remorque, ladite force de remorque étant au moins l'une parmi une force de propulsion de remorque et une force de freinage de remorque, le procédé comprenant :
- la réception d'une demande pour qu'une force souhaitée transmise à la combinaison de véhicules (10) soit fournie par l'ensemble de dispositifs d'aide au mouvement d'une unité dédiée unique de la combinaison de véhicules (10), ladite unité dédiée unique étant soit ledit tracteur (12), soit ladite remorque (14) ;
- lorsqu'il est déterminé que ladite force souhaitée transmise à la combinaison de véhicules (10) peut être fournie par ledit ensemble de dispositifs d'aide au mouvement de ladite unité dédiée unique tout en remplissant chaque exigence de sécurité d'un ensemble prédéterminé d'exigences de sécurité de la combinaison de véhicules (10), ledit ensemble prédéterminé d'exigences de sécurité comprenant au moins une exigence de sécurité, le fonctionnement dudit ensemble de dispositifs d'aide au mouvement de ladite unité dédiée unique uniquement de manière à fournir la force souhaitée, autrement, le fonctionnement d'un ou plusieurs des dispositifs d'aide au mouvement de tracteur (12) ainsi que d'un ou plusieurs des dispositifs d'aide au mouvement de remorque (14) afin de fournir la force souhaitée transmise à la combinaison de véhicules (10),
**caractérisé en ce que** ledit ensemble prédéterminé d'exigences de sécurité de la combinaison de véhicules (10) comprend une condition de sécurité d'accélération latérale exigeant que, pour chacun dudit ensemble de dispositifs d'aide au mouvement de ladite unité dédiée unique, une force longitudinale (Fₓ) produite par ledit dispositif d'aide au mouvement doit être inférieure ou égale à une valeur limite de force longitudinale étant déterminée au moyen d'une fonction de limitation de force longitudinale étant une fonction d'au moins une accélération latérale (a_{y}) de ladite unité dédiée unique.

2. Procédé selon la revendication 1, dans lequel ladite fonction de limitation de force longitudinale est une fonction utilisant une valeur proportionnelle à ladite accélération latérale (a_{y}) de ladite unité dédiée unique en tant qu'entrée et fournit une valeur proportionnelle à une force longitudinale normalisée (Fₓ/µF_{z}), étant la force longitudinale (Fₓ) divisée par une charge verticale totale (F_{z}) transmise à la roue ou aux roues reliées audit dispositif d'aide au mouvement et la valeur de friction (µ) indiquant la friction entre la roue ou les roues reliées audit dispositif d'aide au mouvement et le sol supportant l'unité dédiée unique, en tant que sortie.

3. Procédé selon la revendication 2, dans lequel ladite fonction de limitation de force longitudinale utilise ladite accélération latérale (a_{y}) de ladite unité dédiée unique divisée par une valeur de référence de friction (µg), en tant qu'entrée, ladite valeur de référence de friction étant une valeur de friction (µ) indiquant la friction entre l'ensemble de roues de ladite unité dédiée unique et le sol supportant ladite unité dédiée unique, multipliée par une valeur d'accélération (g) correspondant à l'accélération due à la gravité, dans lequel, de préférence, ladite fonction de limitation de force longitudinale est une fonction échelon de sorte que :
- pour des valeurs de ladite accélération latérale (a_{y}) de ladite unité dédiée unique divisée par ladite valeur de référence de friction (µg) étant inférieures ou égales à un seuil prédéterminé en tant qu'entrée, ladite sortie est réglée sur une valeur non nulle fixe de ladite force longitudinale normalisée (Fₓ/µF_{z}), et
- pour des valeurs de ladite accélération latérale (a_{y}) de ladite unité dédiée unique divisée par une valeur de référence de friction (µg) étant supérieures audit seuil prédéterminé en tant qu'entrée, ladite sortie est réglée sur zéro.

4. Procédé selon l'une quelconque des revendications précédentes, dans lequel ledit ensemble prédéterminé d'exigences de sécurité de la combinaison de véhicules (10) comprend une condition de sécurité de patinage longitudinal exigeant qu'une valeur de patinage longitudinal détectée pour au moins un sous-ensemble sélectionné dudit ensemble de roues pour ladite unité dédiée unique soit inférieure à un seuil prédéterminé.

5. Procédé selon l'une quelconque des revendications précédentes, dans lequel ledit ensemble prédéterminé d'exigences de sécurité de la combinaison de véhicules (10) comprend une condition de détermination d'état exigeant que, pour un état de véhicule prédéterminé, une différence entre une valeur mesurée d'état de véhicule, relative à une valeur mesurée indiquant l'état de véhicule prédéterminé, et une valeur attendue d'état de véhicule, relative à une valeur attendue indiquant l'état de véhicule prédéterminé, se situe dans une plage d'état prédéterminée, dans lequel, de préférence, ladite valeur attendue d'état de véhicule est déterminée à l'aide d'un modèle de véhicule de ladite combinaison de véhicules (10), de préférence ladite valeur attendue d'état de véhicule est déterminée à l'aide d'un modèle de véhicule ainsi que d'un modèle de pneu de l'ensemble de roues de tracteur (16, 18, 20, 22) et/ou de l'ensemble de roues de remorque (24, 26, 28, 30, 32, 34).

6. Procédé selon la revendication 5, dans lequel ledit état de véhicule prédéterminé est une vitesse de lacet de l'unité dédiée unique.

7. Procédé selon l'une quelconque des revendications 5 à 6, dans lequel ledit état de véhicule prédéterminé est un angle d'articulation (φ) ou une vitesse angulaire d'articulation (*φ̇*) entre ledit tracteur (12) et ladite remorque (14).

8. Procédé selon l'une quelconque des revendications 5 à 7, dans lequel ledit état de véhicule prédéterminé est un angle de patinage latéral de l'unité dédiée unique.

9. Procédé selon l'une quelconque des revendications 5 à 8, dans lequel ledit état de véhicule prédéterminé est un angle de patinage latéral d'au moins un sous-ensemble sélectionné dudit ensemble de roues pour ladite unité dédiée unique.

10. Procédé selon l'une quelconque des revendications précédentes, dans lequel la force souhaitée transmise au véhicule est une force de propulsion ou dans lequel la force souhaitée transmise au véhicule est une force de freinage.

11. Procédé selon l'une quelconque des revendications précédentes, dans lequel la combinaison de véhicules (10) comprend une ou plusieurs remorques (14) supplémentaires, chaque remorque (14) supplémentaire comprenant un ensemble de dispositifs d'aide au mouvement de remorque (14) supplémentaire, comprenant au moins un dispositif d'aide au mouvement de remorque (14) supplémentaire, pouvant être relié audit ensemble de roues de remorque (14) supplémentaire pour être ainsi adapté pour fournir au moins une force de remorque (14) supplémentaire, ladite force de remorque (14) supplémentaire étant au moins l'une parmi une force de propulsion de remorque (14) supplémentaire et une force de freinage de remorque (14) supplémentaire, le procédé comprenant :
- la réception d'une demande pour qu'une force souhaitée transmise à la combinaison de véhicules (10) soit fournie par l'ensemble de dispositifs d'aide au mouvement d'une unité dédiée unique de la combinaison de véhicules (10), ladite unité dédiée unique étant soit ledit tracteur (12), ladite remorque (14) ou l'une desdites une ou plusieurs remorques (14) supplémentaires ;
- lorsqu'il est déterminé que ladite force souhaitée transmise à la combinaison de véhicules (10) peut être fournie par ledit ensemble de dispositifs d'aide au mouvement de ladite unité dédiée unique, tout en remplissant chaque exigence de sécurité d'un ensemble prédéterminé d'exigences de sécurité de la combinaison de véhicules (10), ledit ensemble prédéterminé d'exigences de sécurité comprenant au moins une exigence de sécurité, le fonctionnement dudit ensemble de dispositifs d'aide au mouvement de ladite unité dédiée unique uniquement de manière à fournir la force souhaitée, autrement, le fonctionnement d'un ou plusieurs des dispositifs d'aide au mouvement de tracteur (12), ainsi que d'un ou plusieurs des dispositifs d'aide au mouvement de remorque (14) et/ou d'un ou plusieurs des dispositifs d'aide au mouvement de remorque (14) supplémentaire d'une ou plusieurs de la ou des remorques (14) supplémentaires afin de fournir la force souhaitée transmise à la combinaison de véhicules (10).

12. Programme informatique comprenant un moyen de code de programme permettant d'effectuer les étapes selon l'une quelconque des revendications précédentes lorsque ledit programme est exécuté sur un ordinateur.

13. Support lisible par ordinateur contenant un programme informatique comprenant un moyen de code de programme permettant d'effectuer les étapes selon l'une quelconque des revendications 1 à 11 lorsque ledit produit de programme est exécuté sur un ordinateur.

14. Unité de commande permettant de commander un véhicule, l'unité de commande étant configurée pour effectuer les étapes du procédé selon l'une quelconque des revendications 1 à 11.

15. Combinaison de véhicules (10) comprenant une unité de commande selon la revendication 14.
